# EUROPÄISCHE PATENTANMELDUNG

(11) **EP 0 828 153 A1**
(43) Veröffentlichungstag der Anmeldung: **11.03.1998**
(21) Anmeldenummer: 96113910.2
(22) Anmeldetag: 30.08.1996
(51) Int. Cl.: G01M 15/00

(54) **Verfahren und Vorrichtung zur sicheren Messung und Verarbeitung sowie Überprüfung von Messdaten**

(71) Anmelder: ROBERT BOSCH GMBH, 70442 Stuttgart (DE)
(72) Erfinder: Roth, Rolf, 73119 Zell U.a. (DE); Najm, Albert, 73230 Kirchheim (DE); Frey, Bernd, 73230 Kirchheim (DE); Kappen, N., 73733 Esslingen (DE); Nicolai, Lothar, 72581 Dettingen (DE)

(57) **Zusammenfassung**

Die Erfindung bezieht sich auf ein System zur sicheren Messung und Verarbeitung sowie Überprüfung von Meßdaten, insbesondere von Abgasmeßwerten, mit einer Meßeinheit (1) zum Messen der Meßdaten und einer Verarbeitungs-Überprüfungseinheit (2, 3) zum Verarbeiten und Überprüfen der Meßdaten, wobei das System eichbar und gegenüber einer Veränderung der Eichung abgesichert ist, dadurch gekennzeichnet, daß die Absicherung der Meßdaten an der Meßeinheit (1) während der Messung der Meßdaten durchführbar ist, sowie auf ein Verfahren zur sicheren Messung und Verarbeitung sowie Überprüfung von Meßdaten, insbesondere von Abgasmeßwerten, das bei einem System mit einer Meßeinheit zur Messung der Meßdaten und einer Verarbeitungs-Überprüfungseinheit durchgeführt wird und der Reihe nach die Schritte
- Messen der Meßdaten mittels der Meßeinheit,
- Sichern der Meßdaten bei der Messung mittels der Meßeinheit, und
- Übertragen der gesicherten Meßwerte zu der Verarbeitungs-Überprüfungseinheit.
aufweist.
Zur Realisierung des Sicherheitskonzepts wird insbesondere ein Kommunikationsprotokoll zwischen den Meßmodulen und dem Abgasuntersuchungsprogramm und eine Sicherheitskennung jedes Einzelmeßwerts verwendet.

## Beschreibung

### STAND DER TECHNIK

Die vorliegende Erfindung bezieht sich auf eine Vorrichtung zur sicheren Messung und Verarbeitung sowie Überprüfung von Meßdaten gemäß dem Oberbegriff von Anspruch 1. Ferner bezieht sie sich auf ein entsprechendes Verfahren gemäß Anspruch 10.

Bei der Durchführung von Messungen, wie z.B. Abgasuntersuchungen, ist es wichtig, daß das gesamte Meßsystem geeicht werden kann. Ein Abgasmeßgerät besteht allgemein aus einer Meß- und einer Anzeigeeinheit und muß als ganzes zertifiziert und geeicht werden. Bei moderneren Abgasmeßgeräten sind die Meßeinheit und die Anzeigeeinheit gewöhnlich gesondert ausgebildet, wie z.B. in Form eines Meßmoduls und eines PC. Um das gesamte Meßsystem eichfähig zu machen und eine nachträgliche Änderung der Eichung zu vermeiden, sind mehrere Vorgehensweisen bekannt. Zum einen kann das Meßmodul mit einer Alibi-Anzeige oder einem Alibi-Drucker ausgestattet werden. Dadurch wird erreicht, daß lediglich das Meßmodul beeicht und vor Manipulation geschützt werden muß. Eine weitere Möglichkeit zur Sicherung der Erfassung ist die Verplombung des PCs. Dadurch wird die Verwendung des PCs auf die spezifische Anwendung, wie z.B. die Abgasmessung, eingeschränkt und eine Fehlbedienung bzw. Manipulation wird ausgeschlossen. Eine weitere Möglichkeit besteht darin, das Meßprogramm im PC in EPROMs abzulegen. Hierdurch wird eine Manipulation des Meßprogramms vermieden.

In erster Linie muß beim Einsatz eines allgemein nutzbaren PCs auf die Sicherheit der Datenerfassung und -verarbeitung der Abgasmeßwerte geachtet werden. Dies bedeutet, man muß durch geeignete Maßnahmen sicherstellen, daß durch Fehlfunktionen, Fehlbedienung, etc. verfälschte Meßwerte im Gesamtsystem erkannt werden können. Die zum Teil oben genannten Sicherheitsmaßnahmen richten sich dabei nur gegen einfache, zufällige Einflußnahmen. Bewußte, absichtliche Beeinflussungen und Manipulationen können nicht vollständig verhindert werden, sind deshalb auch nicht Ausgangspunkt der Sicherheitsüberlegungen. Es werden z.B. keine Maßnahmen getroffen, um eine gezielte Manipulation mit Hilfe einer Entschlüsselungsvorrichtung zu verhindern. Diese Überlegung ist auch deshalb gerechtfertigt, da bewußt und absichtlich nicht nur innerhalb der Rechnersysteme, sondern auch außerhalb manipuliert werden kann, wie z.B bei der Plazierung der Abgassonde im Auspuff des Fahrzeugs.

Die Verwendung einer Alibi-Anzeige bzw. eines Alibi-Druckers am Meßmodul führt zu erhöhten Kosten. Maßnahmen im Bereich des PC-Systems, wie z.B. die Verplombung des PCs oder das Ablegen des Meßprogramms im PC mit Hilfe von EPROMs, sind Eingriffe in die Hardware des PCs und in die Organisation des Betriebssystems. All diese Maßnahmen führen zu einer Einschränkung des zunächst offenen PC-Systems in der allgemeinen Benutzbarkeit. Durch diese Einschränkungen, die alle mehr oder weniger erfolgreich sind, handelt sich der Benutzer aber gravierende Verfügbarkeitsprobleme für sein System ein. Außerdem sind diese Einschränkungen für den Benutzer schwer zu durchschauen und führen damit zu Bedienungsproblemen des PC-Systems.

Die vorliegende Erfindung verwendet hingegen ein System mit den Merkmalen des Anspruchs 1 bzw. ein Verfahren gemäß Anspruch 10.

### VORTEILE DER ERFINDUNG

Das System bzw. Verfahren der vorliegenden Erfindung ermöglicht den Betrieb des Meßmoduls ohne Alibi-Anzeige/Drucker. Die Meßwerte werden nur über eine Schnittstelle zu dem PC übertragen. Auf diese Weise werden zusätzliche Kosten für Anzeigevorrichtung und Drucker vermieden. Außerdem muß der PC nicht geeicht werden, d.h. er steht auch für andere Anwendungen zur freien Verfügung, und Komponenten des Systems können ohne Nacheichung getauscht werden. Weiterhin wird durch die erfindungsgemäßen Sicherheitsmaßnahmen die freie Verfügbarkeit des PC-Systems nicht eingeschränkt, wodurch der Umgang mit dem System nicht erschwert wird.

Maßnahmen für die sichere Erfassung und Verarbeitung von Meßwerten werden erfindungsgemäß an den Meßwerten selbst bzw. an der direkt beteiligten Hard- und Software angesetzt. Solche Maßnahmen auf der Seite der Meßwerte selbst sind anwendungsspezifische Maßnahmen. Diese Maßnahmen betreffen nur die Anwendung Abgasuntersuchungsprogramm (AU-Programm). Somit wird nicht in die offene Struktur des PC-Systems eingegriffen.

### ZEICHNUNG

Ausführungsbeispiele der Erfindung sind in der Zeichnung dargestellt und in der nachfolgenden Beschreibung näher erläutert. Es zeigen:
- Fig. 1: ein schematisches Diagramm zur Veranschaulichung der Verwendung eines Kommunikationsprotokolls sowie eine Sicherheitskennung in dem erfindungsgemäßen System veranschaulicht, und
- Fig. 2: die Verwendung verschiedener Ausgabe-, Speicher- und Verarbeitungssysteme im Zusammenhang mit der Sicherheitskennung in dem erfindungsgemäßen System veranschaulicht.

### BESCHREIBUNG DES AUSFÜHRUNGSBEISPIELS

Das bei der Abgasuntersuchung eingesetzte Programm zur Datenerfassung (AU-Programm) läuft auf einem PC 2. Die Meßwerte werden über eine serielle Schnittstelle von Meßmodulen 1 empfangen und können am Bildschirm 4 dargestellt werden. Bei den Meßmodulen handelt es sich um Abgas-Meßmodule, Diagnose-Meßmodule, etc.. Die Meßwerte können auch an ein Host-System 3 geschickt und dort im Zusammenhang mit Kundendaten weiter verarbeitet werden.

Das eingesetzte Abgasmeßmodul 1 für Diesel- oder Ottomotoren ist ein Meßsystem ohne Anzeige und Drucker. Es ist in der Lage, Meßwerte über eine serielle Schnittstelle zu senden. Verschiedene Funktionen, wie Kalibrierung etc., werden über diese Schnittstelle bedient. Aktualisierungen des Programms durch den Hersteller können ebenfalls über diese serielle Schnittstelle eingespielt werden.

Der hier eingesetzte PC ist ein Standardgerät (das AU-Programm läuft z.B. unter Windows 3.1) und ist deshalb universell nutzbar für verschiedene Programme mit unterschiedlichen Aufgabenstellungen. Dies entspricht der Tendenz beim technischen Einsatz von PCs und bringt einen optimalen Kosten-Nutzen-Effekt.

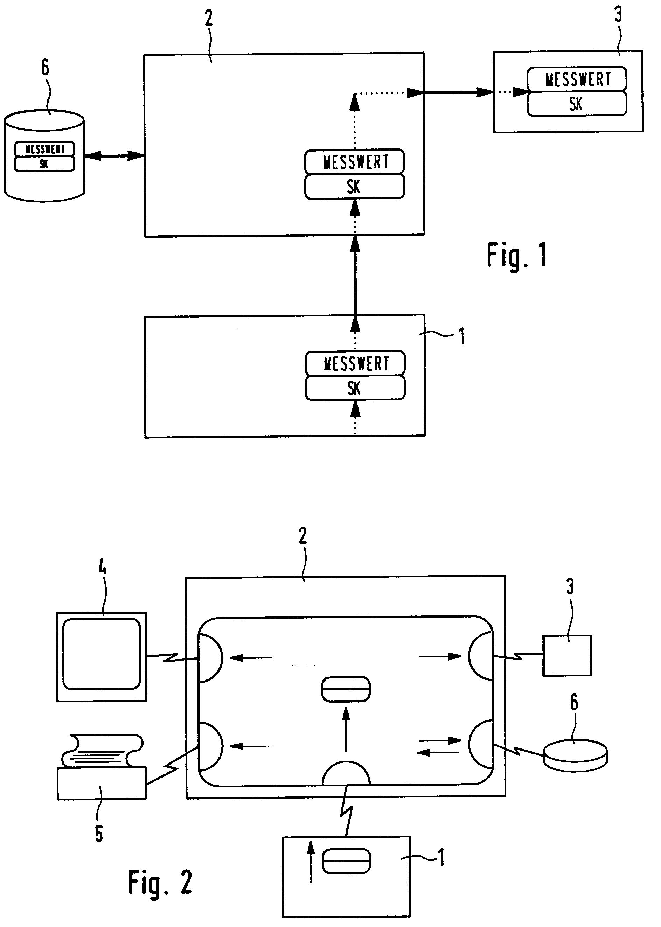

Fig. 1 zeigt schematisch den Einsatz eines Kommunikationsprotokolls zwischen Meßmodulen 1 und dem AU-Programm sowie die Verwendung einer Sicherheitskennung für jeden Einzel-Meßwert.

Bei der Datenübertragung über die serielle Schnittstelle zwischen den Meßmodulen 1 und dem AU-Programm wird ein Datensicherungsprotokoll eingesetzt. Dieses Protokoll besitzt eine Struktur, die vom AU-Programm geprüft wird, sowie ein Sicherungsprüfwort, mit dem die Fehlerfreiheit der Übertragung beim empfangenden AU-Programm verifiziert werden kann. Dieses Sicherungsprüfwort wird nach dem CRC-16-Verfahren (Cyclic Redundancy Code) bestimmt, mit dem eine extrem hohe Übertragungssicherheit erreicht werden kann. Durch diese Maßnahme ist eine sichere Datenübertragung zwischen den Meßmodulen 1 und dem AU-Programm im PC 2 gewährleistet.

Zur Sicherung jedes einzelnen Meßwerts über seine gesamte Lebensdauer innerhalb des Systems 1, 2, 3 wird beim Erfassen des Meßwerts in einem Meßmodul 1 eine Sicherheitskennung SK erzeugt. Diese Sicherheitskennung SK durchläuft zusammen mit dem Meßwert den gesamten Weg Meßmodul 1 - Übertragung - PC-System 2 - Host-System 3. Die Sicherheitskennung besteht aus einem Prüfbyte, welches nach dem CRC-Verfahren durch ein 8-Bit-GeneratorPolynom erzeugt wird. Durch das Mitführen der Sicherheitskennung SK kann an beliebigen Stellen des Systems 1, 2, 3 eine Überprüfung des Meßwerts durchgeführt werden (siehe Fig. 2). So kann das AU-Programm und auch das Host-System 3 diese Überprüfung vornehmen.

Fig. 2 zeigt ein Meßmodul 1, das mit einem PC-System 2 verbunden ist, wobei das PC-System 2 wiederum mit einem Host-System 3 verbunden ist. Das PC-System 2 ist mit weiteren Peripheriegeräten verbunden. Die Richtigkeit der Meßwerte kann somit durch Visualisierung (Bildschirm 4, Drucker 5) bzw. durch Archivierung 6 der jeweiligen Meßwerte mit ihren zugeordneten Sicherheitskennungen SK nachgeprüft werden.

Die Sicherheitskennung ist Meßwert-spezifisch, kann jedoch auch zusätzlich Benutzer-spezifisch sein, z. B. durch Einbezug eines persönlichen "Passwortes" in die Bildung der Sicherheitsnennung. Mit einer solchen "persönlichen" Sicherheitskennung pro Meßwert kann an jeder Stelle und zu jedem Zeitpunkt ein Meßwert verifiziert werden, um Verfälschungen zu erkennen. Diese Maßnahme der Sicherung, Personalisierung und Archivierung 6 ist einer Visualisierung 4, 5 der Meßwerte an den Meßmodulen 1 vorzuziehen, damit durch eine Sicherheitskennung SK eine Objektivierung der Sicherheitsüberprüfung möglich ist. Zudem kann bei einer Archivierung 6 der Meßwerte auch zu späteren Zeitpunkten eine Überprüfung erfolgen.

## Patentansprüche

1. System zur sicheren Messung und Verarbeitung sowie Überprüfung von Meßdaten, insbesondere von Abgasmeßwerten, mit einer Meßeinheit (1) zum Messen der Meßdaten und einer Verarbeitungs-Überprüfungseinheit (2, 3) zum Verarbeiten und Überprüfen der Meßdaten, wobei das System eichbar und gegenüber einer Veränderung der Eichung abgesichert ist, dadurch gekennzeichnet, daß die Absicherung der Meßdaten an der Meßeinheit (1) während der Messung der Meßdaten durchführbar ist.

2. System nach Anspruch 1, dadurch gekennzeichnet, daß die Meßeinheit (1) und die Verarbeitungs-Überprüfungseinheit (2, 3) voneinander gesondert sind und über eine Datenleitung miteinander verbunden sind.

3. System nach Anspruch 1, dadurch gekennzeichnet, daß die Meßeinheit ein Meßmodul (1) ist und die Verarbeitungs-Überprüfungseinheit (2, 3) durch ein PC-System (2) und ein Host-System (3) gebildet ist.

4. System nach Anspruch 3, dadurch gekennzeichnet, daß an dem Meßmodul (1) zwischen Meßmodul (1) und PC (2) ein Kommunikationsprotokoll eingesetzt wird.

5. System nach Anspruch 4, dadurch gekennzeichnet, daß das Kommunikationsprotokoll eine von dem PC (2) prüfbare Struktur sowie ein Sicherungsprüfwort zur Überprüfung der Fehlerfreiheit der Übertragung beim empfangenden PC (2) aufweist.

6. System nach Anspruch 5, dadurch gekennzeichnet, daß das Sicherungsprüfwort ein CRC-16-Prüfwort ist.

7. System nach Anspruch 3, dadurch gekennzeichnet, daß an dem Meßmodul (1) dem jeweiligen Meßwert eine Sicherheitskennung (SK) zur Sicherung jedes einzelnen Meßwerts zugeordnet werden kann.

8. System nach Anspruch 7, dadurch gekennzeichnet, daß die Sicherheitskennung (SK) des Meßwerts durch das gesamte System (1, 2, 3) mitgeführt werden kann.

9. System nach Anspruch 7, dadurch gekennzeichnet, daß die Sicherheitskennung (SK) personalisiert und einem Bereich des Systems zugeordnet werden kann.

10. Verfahren zur sicheren Messung und Verarbeitung sowie Überprüfung von Meßdaten, insbesondere von Abgasmeßwerten, das bei einem System mit einer Meßeinheit zur Messung der Meßdaten und einer Verarbeitungs-Überprüfungseinheit durchgeführt wird und die folgenden Schritte aufweist:
- Messen der Meßdaten mittels der Meßeinheit,
- Sichern der Meßdaten bei der Messung mittels der Meßeinheit, und
- Übertragen der gesicherten Meßwerte zu der Verarbeitungs-Überprüfungseinheit.

11. Verfahren nach Anspruch 10, dadurch gekennzeichnet, daß zur Sicherung der einzelnen Meßwerte ein Kommunikationsprotokoll verwendet wird, das von der Verarbeitungs-Überprüfungseinheit geprüft wird und ein Sicherungsprüfwort aufweist, mit dem die Fehlerfreiheit bei der Übertragung der Meßwerte überprüft werden kann.

12. Verfahren nach Anspruch 11, dadurch gekennzeichnet, daß das Sicherungsprüfwort nach dem CRC-16-Verfahren bestimmt wird.

13. Verfahren nach Anspruch 10 bis 12, dadurch gekennzeichnet, daß zur Sicherung der Meßwerte bei der Messung der Meßwerte eine Sicherheitskennung für jeden Meßwert erzeugt wird, die jedem einzelnen Meßwert zugeordnet wird und zusammen mit diesem durch das System übertragen wird.

14. Verfahren nach Anspruch 13, dadurch gekennzeichnet, daß die Sicherheitskennung nach dem CRC-Verfahren mittels eines 8-Bit-Generator-Polynoms erzeugt wird.

15. Verfahren nach Anspruch 10 bis 14, dadurch gekennzeichnet, daß die Sicherung der Meßwerte personalisiert durchgeführt und dem Benutzer des Systems zugeordnet wird.
